# DEMANDE DE BREVET EUROPEEN

(11) **EP 3 375 664 A1**
(43) Date de publication de la demande: **19.09.2018**
(21) Numéro de dépôt: 18160475.2
(22) Date de dépôt: 07.03.2018
(51) Int. Cl.: B60Q 1/50

(54) **DISPOSITIF LUMINEUX D'IDENTIFICATION DU TYPE DE PROPULSION D'UN VÉHICULE AUTOMOBILE**

(30) Priorité: 15.03.2017 FR 1752120
(71) Demandeur: Valeo Vision, 93012 Bobigny Cedex (FR)
(72) Inventeur: DUBOSC, Christophe, 93012 Bobigny Cedex (FR); MANCEAU, Denis, 93012 Bobigny Cedex (FR); MATHIEU, Remi, 93012 Bobigny Cedex (FR); PILLA, Edmond, 93012 Bobigny Cedex (FR)
(74) Mandataire: Valeo Vision

(57) **Abrégé**

L'invention a pour objet un dispositif lumineux (11, 12, 13, 14, 15, 16, 17, 31, 32, 33, 41, 42, 43, 44, 51) pour un véhicule automobile (1, 2, 3, 4, 5), le dispositif lumineux étant apte à émettre au moins un faisceau lumineux dont au moins une caractéristique est relative au type de propulsion dudit véhicule automobile, ledit dispositif étant agencé pour émettre ledit faisceau lumineux au moins lors d'un déplacement dudit véhicule automobile.

## Description

L'invention a trait au domaine de l'éclairage et/ou de la signalisation lumineuse. Plus particulièrement, l'invention a trait au domaine de la signalisation lumineux des véhicules à moteur de type électrique ou hybride.

L'accroissement des facteurs de pollution, et notamment de l'émission de polluants par les véhicules à propulsion par un moteur de type thermique (ou à combustion), entraine aujourd'hui l'apparition de règlementations de plus en plus strictes encadrant ces facteurs. On constate par exemple l'apparition d'interdictions de circulations de tels véhicules en milieu urbain lors de pics de pollution ou encore dans des zones spécifiques dites ZCR (zones à circulation restreinte) excluant ces véhicules. A l'inverse, la circulation de véhicules à propulsion par un moteur de type électrique, que ce soit partiellement électrique (également nommé hybride) ou totalement électrique, est autorisée à l'occasion de pics de pollution ou dans les ZCR.

Pour autant, il est nécessaire de pouvoir rapidement identifier ces véhicules à moteur de type électrique, et les différencier facilement des autres types de véhicule, par exemple afin de faciliter les contrôles dans les milieux urbains et les ZCR par les autorités, et ainsi éviter les congestions de trafic.

Par ailleurs, l'évolution récente des technologies en matière de batterie électrique et de moteur électrique a permis de réduire le coût des véhicules à moteur de type électrique et de rallonger leur autonomie de circulation, ce qui provoque une augmentation du parc automobile électrique.

Néanmoins, dans un environnement urbain présentant un niveau de bruit ambiant important, il peut être compliqué de discerner l'approche d'un véhicule à moteur de type électrique, par nature particulièrement silencieux et dont le bruit va se fondre dans ce niveau de bruit ambiant. La discrétion de ces véhicules est par conséquent susceptible de provoquer des accidents avec d'autres usagers de la route, comme des piétons ou des cyclistes, ne les ayant pas détectés. Il existe donc un besoin de signaler le déplacement de ces véhicules à moteur de type électrique aux autres usagers de la route, afin de minimiser la probabilité d'un accident.

L'invention a pour objectif de proposer une solution répondant à au moins un des besoins identifiés ci-dessus.

L'invention a ainsi pour objet un dispositif lumineux pour un véhicule automobile, le dispositif lumineux étant apte à émettre au moins un faisceau lumineux dont au moins une caractéristique est relative au type de propulsion dudit véhicule automobile, ledit dispositif étant agencé pour émettre ledit faisceau lumineux au moins lors d'un déplacement dudit véhicule automobile.

L'utilisation d'une lumière caractéristique du type de propulsion utilisée par le véhicule permet donc de différencier ce dernier des véhicules présentant un type de propulsion plus polluant, et permet également d'avertir les autres usagers de la route du déplacement de ce véhicule.

Le faisceau lumineux réalise ainsi une fonction de signalisation dudit véhicule automobile, nécessairement visible par un observateur extérieur ou un usager de la route situé à l'extérieur du véhicule automobile.

Avantageusement, le dispositif comporte une unité de contrôle agencée pour commander l'émission dudit faisceau lumineux par le dispositif lumineux lors d'un déplacement dudit véhicule automobile

Selon un mode avantageux de l'invention, ledit dispositif lumineux est agencé pour que ledit faisceau lumineux indique à un observateur extérieur au véhicule le type de motorisation dudit véhicule automobile. Ladite caractéristique du faisceau lumineux est ainsi reliée au type de moteur utilisé par le véhicule automobile, et est immédiatement perceptible par l'observateur extérieur qui peut directement identifier quel est ce type de moteur. Il peut être prévu que le faisceau lumineux présente plusieurs caractéristiques, chacune reliée au type de moteur utilisé par le véhicule.

Si on le souhaite, ledit dispositif lumineux peut être agencé pour que ladite caractéristique soit variable en fonction d'une évolution d'un facteur de pollution du véhicule, lors du déplacement du véhicule ou le long de la vie du véhicule, et notamment en fonction de l'évolution d'au moins un paramètre choisi parmi les paramètres suivants :
- la quantité de polluants, et notamment la quantité de gaz CO2, émis par le véhicule automobile,
- le mode de conduite du véhicule automobile sélectionné par le conducteur du véhicule, et notamment la sélection d'un mode de conduite parmi des modes de conduites sport, normal ou écologique,
- la vitesse du véhicule automobile,
- le poids en charge du véhicule automobile.

De la sorte, il peut être anticipé un durcissement d'une réglementation anti-pollution qui viendrait encadrer de façon plus stricte la circulation des véhicules polluants. On vient également améliorer la différenciation entre véhicule polluant et véhicule non polluant.

En variante, ladite caractéristique peut être fixe.

Avantageusement, ledit dispositif lumineux est agencé pour émettre ledit faisceau lumineux lorsque le véhicule automobile se déplace dans une zone de circulation prédéterminée. Dés lors, l'identification du type de moteur utilisé par le véhicule automobile peut ne se faire que lorsqu'elle est nécessaire, notamment lorsque le véhicule circule lors d'un pic de pollution ou dans une ZCR. Le cas échéant, l'unité de contrôle peut être pourvue de moyens de détermination du type de zone dans lequel le véhicule automobile circule, qui peuvent par exemple être un GPS et/ou des moyens de communication avec une infrastructure urbaine.

Avantageusement, le dispositif lumineux est agencé pour que ladite caractéristique relative au type de propulsion dudit véhicule automobile soit une longueur d'onde du faisceau lumineux émis par le dispositif lumineux. On peut par exemple prévoir l'émission par le dispositif lumineux d'un faisceau lumineux de couleur bleue lorsque le véhicule automobile comporte un moteur de type uniquement électrique, de couleur verte lorsque le véhicule comporte un moteur de type hybride, et de couleur jaune lorsque le véhicule comporte un moteur de type uniquement thermique. En variante, ladite caractéristique peut être une température de couleur d'une lumière blanche.

De façon alternative ou additionnelle, le dispositif lumineux peut être agencé pour que ladite caractéristique relative au type de propulsion dudit véhicule automobile soit la fréquence d'une pulsation dans le faisceau lumineux émis par le dispositif lumineux. On peut par exemple prévoir l'émission d'un faisceau lumineux pulsé par le dispositif lumineux lorsque le véhicule automobile comporte un moteur de type partiellement ou totalement électrique et d'un faisceau lumineux continu lors que le véhicule automobile comporte un moteur de type thermique.

De façon alternative ou additionnelle, le dispositif lumineux peut être agencé pour que ladite caractéristique relative au type de propulsion dudit véhicule automobile soit un motif réalisé par le faisceau lumineux émis par le dispositif lumineux. Le cas échéant, ledit motif peut être projeté sur la route par le dispositif lumineux ou affiché sur un écran du dispositif lumineux.

L'invention s'étend également un dispositif lumineux qui émet un faisceau lumineux uniquement si le véhicule automobile est pourvu d'un moteur de type partiellement ou totalement électrique. Dans ce cas, seul un véhicule à moteur électrique s'identifierait comme tel par un faisceau lumineux, les véhicules à moteur thermique n'émettant aucun faisceau lumineux d'identification.

Selon un mode avantageux de l'invention, ledit véhicule automobile étant un véhicule à propulsion au moins partiellement électrique, ledit dispositif lumineux est agencé pour que ledit faisceau lumineux indique à un usager de la route le déplacement dudit véhicule automobile. Le cas échéant, ladite caractéristique relative au type de propulsion dudit véhicule automobile est relative à une propulsion dite silencieuse. On entend par propulsion silencieuse une propulsion par laquelle le véhicule automobile se déplace en générant du bruit selon un niveau sonore inférieur à celui d'un véhicule à propulsion uniquement thermique, par exemple inférieur ou égal à 60 dBA lorsque le véhicule automobile se déplace à 20 km/h.

Avantageusement, le dispositif lumineux est agencé pour projeter ledit faisceau lumineux vers l'usager de la route. Si on le souhaite, le dispositif lumineux peut être agencé pour que ladite caractéristique relative au type de propulsion dudit véhicule automobile soit un motif réalisé par le faisceau lumineux émis par le dispositif lumineux. Avantageusement, le dispositif lumineux peut être agencé pour projeter ledit motif dans une zone de la route déterminée en fonction de la position de l'usager de la route et du déplacement dudit véhicule automobile. Le cas échéant, l'unité de contrôle peut être pourvue de moyens de détection de la présence d'un usager de la route à avertir, de détermination du type de l'usager de la route et de la position de l'usager de la route et/ou de moyens d'analyse et/ou de prédiction du déplacement du véhicule automobile.

En variante, le dispositif lumineux peut être agencé pour projeter ledit faisceau lumineux sur une zone entourant, partiellement ou complètement, ledit véhicule automobile.

Si on le souhaite, le dispositif lumineux peut être agencé pour émettre un son de façon concomitante avec l'émission du faisceau lumineux.

Selon un mode de réalisation de l'invention, le dispositif lumineux comprend une source lumineuse apte à émettre des rayons lumineux, éventuellement associée à des moyens optiques agencés pour former et projeter sur la route et/ou sur un écran le faisceau lumineux à partir desdits rayons lumineux.

Avantageusement, la source lumineuse peut comporter une source élémentaire apte à émettre des rayons lumineux d'une longueur d'onde prédéterminée. Si on le souhaite, la source lumineuse peut comporter plusieurs sources élémentaires, notamment trois sources élémentaires, chacune apte à émettre des rayons lumineux d'une longueur d'onde prédéterminée distincte, notamment rouge, verte et bleue. Eventuellement, la source lumineuse peut comporter une matrice de sources élémentaires, notamment activables sélectivement par l'unité de contrôle.

Avantageusement, la ou chaque source élémentaire peut être une source émettrice de lumière à semi-conducteur, notamment une diode électroluminescente, une diode laser, une diode électroluminescente organique, une pastille d'un matériau photoluminescent.

Le cas échéant, le dispositif lumineux peut comporter un ou plusieurs des ensembles suivants:
- un boîtier fermé par un écran et recevant la source lumineuse, le boîtier et/ou l'écran étant réalisé en matériau diffusant pour diffuser à travers l'écran des rayons lumineux émis par la source lumineuse;
- un guide de lumière, notamment un guide de lumière tubulaire, surfacique ou encore une fibre optique, comportant une zone de couplage pour recevoir des rayons lumineux émis par la source lumineuse et les coupler dans le guide de lumière et une zone de découplage pour dévier les rayons lumineux se propageant dans le guide de lumière vers l'extérieur du dispositif lumineux ou sur un écran du dispositif lumineux;
- une lentille et/ou un réflecteur et/ou un collimateur pour dévier des rayons lumineux émis par la source lumineuse vers l'extérieur du dispositif lumineux ou sur un écran du dispositif lumineux;
- une matrice de micro-miroirs, chaque micro-miroir étant mobile entre au moins une première position dans laquelle une portion des rayons lumineux émis par la source lumineuse est déviée vers l'extérieur du dispositif lumineux ou sur un écran du dispositif lumineux et une deuxième position dans laquelle ladite portion est déviée vers l'intérieur du dispositif lumineux ;
- un dispositif de balayage, notamment un microsystème électromécanique (MEMS), apte à balayer, notamment par réflexion, des rayons lumineux émis par la source lumineuse sur une plaque réalisée en matériau photoluminescent, une portion desdits rayons lumineux étant convertie par la plaque et une autre portion étant diffusée par la plaque, l'ensemble des portions converties et diffusées étant déviées par la plaque vers l'extérieur du dispositif lumineux ou sur un écran du dispositif lumineux.

Selon un mode de réalisation de l'invention, le dispositif lumineux peut former une partie ou la totalité d'un ou plusieurs des équipements du véhicule automobile, et notamment d'un ou plusieurs des équipements suivants :
- une poignée de porte ;
- un rétroviseur latéral extérieur ;
- un projecteur avant ;
- un feu arrière ;
- un feu stop surélevé ;
- un dispositif d'éclairage du pare-brise ;
- un dispositif d'éclairage d'une plaque d'immatriculation ;
- une antenne;
- une jante de roue;
- un logo ;
- une partie de la carrosserie, et notamment un montant, un bas de caisse, un aileron, une grille de calandre.

Avantageusement, le dispositif lumineux peut être agencé pour que ledit faisceau lumineux réalise une partie ou la totalité d'une fonction lumineuse réglementaire prédéterminée, et notamment un feu diurne, un feu de position, un feu stop ou un indicateur de direction.

L'invention a également pour objet un véhicule automobile comportant un dispositif lumineux selon l'invention. Le cas échéant, le véhicule automobile peut être équipé pour sa propulsion d'un moteur de type partiellement ou totalement électrique.

Avantageusement, le véhicule automobile comporte plusieurs dispositifs lumineux selon l'invention. Si on le souhaite, le véhicule automobile peut comporter une unité de contrôle commandant tous les dispositifs lumineux selon l'invention du véhicule.

D'autres caractéristiques et avantages de la présente invention seront mieux compris à l'aide de la description et des dessins parmi lesquels :
- La figure 1A est une vue d'un véhicule équipé d'un moteur thermique selon l'état de l'art ;
- La figure 1B est une vue d'un véhicule équipé d'un moteur hybride et de plusieurs dispositifs lumineux conforme à l'invention ;
- La figure 1C est une vue d'un véhicule équipé d'un moteur électrique et de plusieurs dispositifs lumineux conforme à l'invention ;
- La figure 2A à 2C sont des vues de face, de derrière et de côté d'un véhicule équipé d'un moteur électrique et de plusieurs dispositifs lumineux conforme à l'invention ; et
- La figure 3 est une vue d'un véhicule équipé d'un moteur électrique et de plusieurs dispositifs lumineux conforme à l'invention.

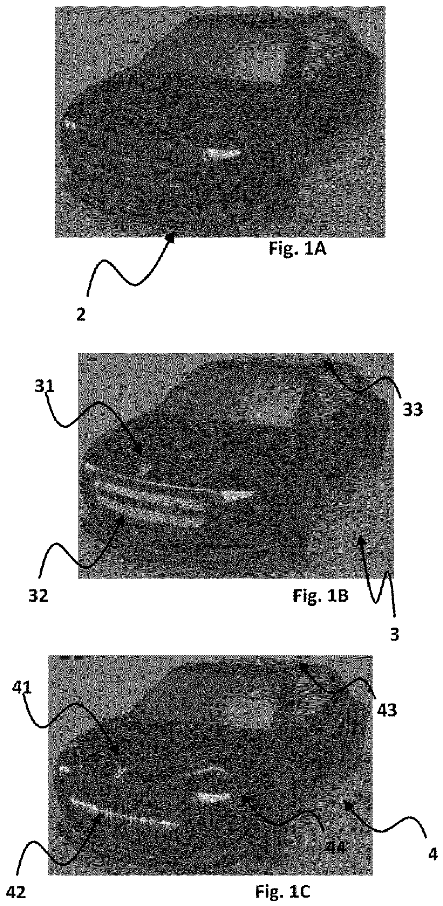

La figure 1A illustre un véhicule automobile 2 équipé d'un moteur thermique conforme à l'état de l'art. Ce véhicule 2 est dépourvu de tout dispositif lumineux permettant d'identifier le type de motorisation dont il est pourvu.

La figure 1B illustre un véhicule automobile 3 équipé d'un moteur de type hybride, c'est-à-dire partiellement électrique.

Ce véhicule 3 comporte un premier dispositif lumineux 31 formant un logo disposé sur la carrosserie du véhicule. Ce dispositif lumineux 31 comporte par exemple un système optique (non représenté) comprenant une source lumineuse émettant de la lumière de couleur violette et un boîtier fermé par un écran, l'écran étant partiellement masqué pour former les contours du logo. Le boîtier reçoit la source lumineuse et le boîtier et l'écran sont réalisés en matériau diffusant pour diffuser à travers les parties non masqués de l'écran des rayons lumineux émis par la source lumineuse.

Le véhicule 3 comporte également un deuxième dispositif lumineux 32 intégré dans une grille de calandre du véhicule et un troisième dispositif lumineux 33 formant un aileron disposé sur une partie supérieure de la carrosserie du véhicule. Les dispositifs 32 et 33 comportent chacun un système optique (non représenté) conforme à celui du dispositif 31 comprenant une source lumineuse émettant de la lumière de couleur violette.

Le véhicule 3 comporte enfin des moyens de détermination (non représentés) du type de zone dans lequel le véhicule 3 circule et une unité de contrôle (non représentée) agencée pour commander l'allumage ou l'extinction des sources lumineuses des dispositifs 31 à 33 en fonction du type de zone déterminée par les moyens de détermination.

Lorsque les moyens de détermination déterminent que le véhicule circule dans une zone à circulation restreinte ZCR, excluant les véhicules à moteur thermique, l'unité de contrôle commande l'allumage des sources lumineuses des dispositifs 31 à 33, de sorte à ce que ces dispositifs émettent chacun un faisceau lumineux de couleur violette permettant de signaler à un observateur extérieur ou un usager de la route situé à l'extérieur du véhicule automobile le type de motorisation dudit véhicule 3. L'utilisation d'une lumière d'une couleur inhabituelle dans le domaine de la signalisation automobile et l'émission de lumière par des organes du véhicule traditionnellement non équipés de sources lumineuses permettent en effet à un observateur extérieur d'identifier immédiatement que le véhicule 3 est un véhicule non polluant, équipé d'un moteur de type hybride.

Il va de soi que l'unité de contrôle peut commander l'allumage des sources lumineuses des dispositifs 31 à 33 indépendamment de la zone dans laquelle le véhicule 3 circule, de sorte à identifier en permanence le type de motorisation du véhicule 3.

La figure 1C illustre un véhicule automobile 4 équipé d'un moteur de type totalement électrique.

Ce véhicule 3 comporte un premier dispositif lumineux 41 formant un logo disposé sur la carrosserie du véhicule, un deuxième dispositif lumineux 42 intégré dans une grille de calandre du véhicule et un troisième dispositif lumineux 43 formant un aileron disposé sur une partie supérieure de la carrosserie du véhicule et un quatrième dispositif lumineux 44 disposé sur une partie de la carrosserie du véhicule entourant partiellement le projecteur avant gauche du véhicule (un dispositif lumineux similaire étant disposé sur une partie de la carrosserie entourant le projecteur avant droit).

Les premier et troisième dispositifs lumineux 41 et 43 sont similaires à ceux du véhicule 3 de la figure 1C, à l'exception des sources lumineuses qui émettent ici de la lumière de couleur verte.

Le deuxième dispositif lumineux 42 comporte un système optique (non représenté) comprenant une source lumineuse et un écran, la source lumineuse étant formée par une matrice de sources élémentaires activables sélectivement, émettant chacune de la lumière de couleur verte vers l'écran.

Le quatrième dispositif lumineux 44 comporte une source lumineuse émettant de la lumière de couleur verte, un écran diffusant et une fibre optique disposée derrière l'écran diffusant et comportant une zone de couplage pour recevoir des rayons lumineux émis par la source lumineuse du dispositif 44 et les coupler dans la fibre optique et une zone de découplage s'étendant sur la longueur de la fibre optique pour dévier les rayons lumineux se propageant dans la fibre optique vers l'écran du dispositif 44.

Le véhicule 4 comporte une unité de contrôle pour commander l'allumage des sources lumineuses des dispositifs 41 à 44. En particulier, l'unité de contrôle commande l'activation sélective des sources élémentaires de la source lumineuse du dispositif 42, de sorte à ce que ce dispositif 42 affiche un motif lumineux spécifique sur son écran.

L'émission de faisceaux lumineux de couleur verte, différente de celle du véhicule 3 de la figure 1B et l'émission d'un motif lumineux spécifique permettent à un observateur extérieur d'identifier immédiatement que le véhicule 4 est un véhicule non polluant, distinct de celui de la figure 1B, et donc équipé d'un moteur de type électrique.

Les figures 1A à 1C illustrent donc comment un dispositif lumineux selon l'invention permet de différencier différents types de motorisation, via des signatures lumineuses se distinguant par une caractéristique spécifique associée à un type de motorisation particulier (ici la couleur du faisceau émis par le dispositif ou encore le motif lumineux réalisé par le dispositif).

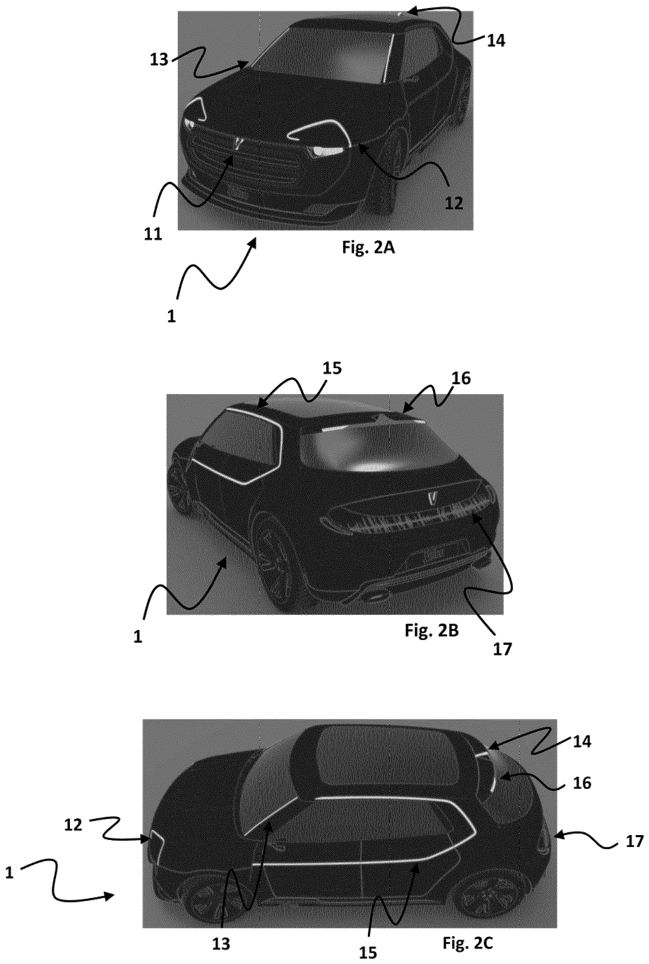

On a représenté aux figures 2A, 2B et 2C, différentes vues d'un véhicule automobile 1, pourvu d'un moteur de type totalement électrique et d'une pluralité de dispositifs lumineux 11 à 17 selon l'invention.

Le dispositif lumineux 11 forme un logo disposé sur la carrosserie du véhicule, de façon similaire au dispositif lumineux 31 du véhicule 3 de la figure 1b.

Le dispositif lumineux 12 est disposé sur une partie de la carrosserie du véhicule entourant partiellement le projecteur avant gauche du véhicule, conformément au dispositif lumineux 44 du véhicule 4 de la figure 1C.

Le dispositif lumineux 14 formant un aileron disposé sur une partie supérieure de la carrosserie du véhicule, conformément au dispositif lumineux 33 du véhicule 3 de la figure 1B.

Les dispositifs lumineux 13 et 15 sont intégrés respectivement dans un montant de pare-brise avant et dans un montant de vitre latérale du véhicule automobile 1, et sont conformes au dispositif lumineux 44 du véhicule 4 de la figure 1C.

Le dispositif lumineux 16 forme une partie d'un feu stop surélevé. Ce feu stop surélevé est divisé en deux parties latérales entourant une partie centrale. Les parties latérales sont pourvues de sources lumineuses comprenant une source élémentaire émettant de la lumière verte et une source élémentaire émettant de la lumière rouge, tandis que la partie centrale est pourvue uniquement de sources lumineuses émettant de la lumière rouge. Lorsqu'il existe un besoin d'identifier le type de motorisation du véhicule automobile 1, une unité de contrôle du véhicule 1 commande l'allumage des sources élémentaires émettant de la lumière verte, de sorte à ce que les parties latérales du feu stop surélevé émettent un faisceau lumineux caractéristique du type de motorisation du véhicule 1. Les parties latérales forment ainsi le dispositif lumineux 16. Lorsqu'il est nécessaire de réaliser la fonction lumineuse réglementaire de feu stop surélevé, l'unité de contrôle commande l'allumage des sources élémentaires émettant de la lumière rouge des parties latérales et des sources lumineuses de la partie centrale, de sorte à ce que la totalité du feu stop surélevé réalise cette fonction lumineuse réglementaire de feu stop surélevé. Le dispositif lumineux 16 est ainsi incorporé partiellement dans une fonction réglementaire du véhicule 1.

Le dispositif lumineux 17 forme la totalité d'un feu arrière du véhicule automobile 1, s'étendant sur toute la largeur du véhicule. Ce dispositif lumineux 17 comporte des sources lumineuses émettant de la lumière rouge et une matrice de micro-miroirs, chaque micro-miroir étant mobile entre au moins une première position dans laquelle une portion des rayons lumineux émis par ces sources lumineuses est déviée vers un écran du dispositif lumineux 17 et une deuxième position dans laquelle ladite portion est déviée vers l'intérieur du dispositif lumineux et n'est donc pas déviée vers l'écran. L'unité de contrôle du véhicule automobile 1 contrôle à la fois l'émission de lumière par les sources lumineuses du dispositif lumineux 17 et la position de chacun des micro-miroirs de ce dispositif lumineux 17, de sorte à ce que le dispositif lumineux 17 puisse afficher un motif lumineux sur son écran. Du fait de l'utilisation de sources lumineuses de lumière rouge, l'ensemble du dispositif lumineux 17 peut donc réaliser soit la totalité d'une fonction lumineuse réglementaire, par exemple un feu stop ou un feu de position, lorsque cette fonction est nécessaire, soit un motif lumineux identifiant le type de motorisation du véhicule 1, lorsque cette identification est nécessaire.

Le véhicule automobile 1 pourrait également incorporer d'autre dispositifs lumineux selon l'invention, notamment au niveau d'un rétroviseur latéral extérieur ; d'un projecteur avant ; d'un dispositif d'éclairage du pare-brise ; d'un dispositif d'éclairage d'une plaque d'immatriculation ; d'une antenne ; d'une jante de roue; d'un châssis ou d'un bas de caisse.

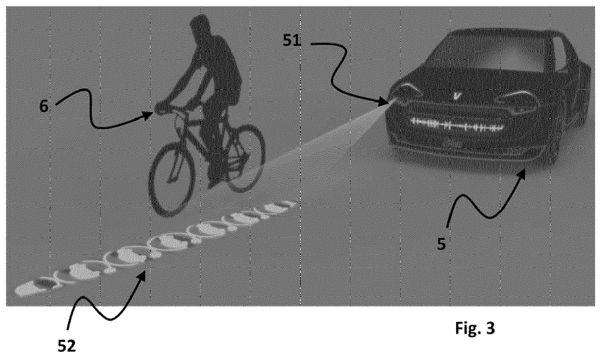

On a représenté en figure 3 un véhicule automobile 5, pourvu d'un moteur de type totalement électrique et d'un dispositif lumineux 51 selon un autre mode de réalisation de l'invention.

Le dispositif lumineux 51 comporte un système optique (non représenté) comprenant une source lumineuse de type diode laser, un microsystème électromécanique (MEMS), apte à balayer, notamment par réflexion, des rayons lumineux émis par la diode laser sur une plaque réalisée en matériau photoluminescent, une portion desdits rayons lumineux étant convertie par la plaque et une autre portion étant diffusée par la plaque, l'ensemble des portions converties et diffusées étant déviées par la plaque vers un système optique de projection projetant sur la route cet ensemble de portions converties et diffusées sous la forme d'un faisceau lumineux 52.

Le véhicule automobile comporte une unité de contrôle contrôlant l'émission de lumière de la diode laser et les mouvements du microsystème électromécanique, de sorte à ce la diode laser émette de la lumière de façon synchronisée avec le balayage de cette lumière sur la plaque en matériau photoluminescent, le faisceau lumineux résultant de la projection des rayons lumineux convertis et diffusés par cette plaque formant ainsi un motif lumineux spécifique 52.

L'unité de contrôle est pourvue de moyens de détection de la présence d'un usager de la route 6 et de détermination de la position de l'usager de la route 6.

Le véhicule automobile 5 étant un véhicule à propulsion au moins partiellement électrique, le niveau sonore qu'il génère lors de son déplacement est peu élevé et se fond dans le bruit ambiant de son environnement. L'unité de contrôle commande donc le dispositif lumineux 51 pour l'émission d'un motif lumineux 52 vers l'usager de la route 6, de sorte à lui indiquer un déplacement dudit véhicule automobile 5 dans sa direction. L'usager de la route 6 est donc averti de la présente dudit véhicule 5, malgré son déplacement silencieux.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux

## Revendications

1. Dispositif lumineux (11, 12, 13, 14, 15, 16, 17, 31, 32, 33, 41, 42, 43, 44, 51) pour un véhicule automobile (1, 2, 3, 4, 5), le dispositif lumineux étant apte à émettre au moins un faisceau lumineux dont au moins une caractéristique est relative au type de propulsion dudit véhicule automobile, ledit dispositif étant agencé pour émettre ledit faisceau lumineux au moins lors d'un déplacement dudit véhicule automobile.

2. Dispositif selon la revendication précédente, dans lequel ledit dispositif lumineux (11, 12, 13, 14, 15, 16, 17, 31, 32, 33, 41, 42, 43, 44) est agencé pour que ledit faisceau lumineux indique à un observateur extérieur au véhicule le type de motorisation dudit véhicule automobile (1, 2, 3, 4).

3. Dispositif selon l'une des revendications précédentes, dans lequel ledit dispositif lumineux (11, 12, 13, 14, 15, 16, 17, 31, 32, 33, 41, 42, 43, 44) est agencé pour que ladite caractéristique soit variable en fonction d'une évolution d'un facteur de pollution du véhicule (1, 2, 3, 4).

4. Dispositif selon l'une des revendications précédentes, dans lequel ledit dispositif (11, 12, 13, 14, 15, 16, 17, 31, 32, 33, 41, 42, 43, 44) est agencé pour émettre ledit faisceau lumineux lorsque le véhicule automobile se déplace dans une zone de circulation prédéterminée.

5. Dispositif selon l'une des revendications précédentes, **caractérisé en ce que** le dispositif lumineux (11, 12, 13, 14, 15, 16, 31, 32, 33, 41, 43, 44) est agencé pour que ladite caractéristique relative au type de propulsion dudit véhicule automobile (1, 2, 3, 4) soit une longueur d'onde du faisceau lumineux émis par le dispositif lumineux.

6. Dispositif selon l'une des revendications précédentes, **caractérisé en ce que** le dispositif lumineux (11, 12, 13, 14, 15, 16, 17, 31, 32, 33, 41, 42, 43, 44) est agencé pour que ladite caractéristique relative au type de propulsion dudit véhicule automobile (1, 2, 3, 4) soit la fréquence d'une pulsation dans le faisceau lumineux émis par le dispositif lumineux.

7. Dispositif selon l'une des revendications précédentes, **caractérisé en ce que** le dispositif lumineux (17, 42) est agencé pour que ladite caractéristique relative au type de propulsion dudit véhicule automobile (1, 4) soit un motif réalisé par le faisceau lumineux émis par le dispositif lumineux.

8. Dispositif selon l'une des revendications précédentes, ledit véhicule automobile (5) étant un véhicule à propulsion au moins partiellement électrique, dans lequel ledit dispositif lumineux (51) est agencé pour que ledit faisceau lumineux (52) indique à un usager de la route (6) le déplacement dudit véhicule automobile.

9. Dispositif selon la revendication 8, **caractérisé en ce que** le dispositif lumineux (51) est agencé pour projeter ledit faisceau lumineux (52) vers l'usager de la route (6).

10. Dispositif selon la revendication 8, **caractérisé en ce que** le dispositif lumineux (51) est agencé pour projeter ledit faisceau lumineux sur une zone entourant, partiellement ou complètement, ledit véhicule automobile.

11. Véhicule automobile (1, 2, 3, 4, 5), comportant un dispositif lumineux (11, 12, 13, 14, 15, 16, 17, 31, 32, 33, 41, 42, 43, 44, 51) selon l'une des revendications 1 à 10.
